# EUROPÄISCHE PATENTSCHRIFT

(11) **EP 0 730 996 B1**
(45) Veröffentlichungstag und Bekanntmachung des Hinweises auf die Patenterteilung: **15.03.2000**
(21) Anmeldenummer: 95118671.7
(22) Anmeldetag: 28.11.1995
(51) Int. Cl.: B60Q 1/068

(54) **Scheinwerfer für Fahrzeuge**
Vehicle headlamp
Phare pour véhicule

(30) Priorität: 04.03.1995 DE 19507586
(43) Veröffentlichungstag der Anmeldung: 11.09.1996
(73) Patentinhaber: ROBERT BOSCH GMBH, 70442 Stuttgart (DE)
(72) Erfinder: Dobler, Karl-Otto, D-72768 Reutlingen (DE); Krieg, Wolfgang, D-72770 Reutlingen (DE)

(56) Entgegenhaltungen:
- DE-A- 2 431 095
- FR-A- 2 619 539
- FR-A- 2 666 867
- GB-A- 2 233 754

## Beschreibung

### Stand der Technik

Die Erfindung geht aus von einem Scheinwerfer für Fahrzeuge nach der Gattung des Anspruchs 1.

Ein solcher Scheinwerfer ist durch die DE 24 31 095 A1 bekannt. Dieser Scheinwerfer weist einen Reflektor auf, der an einer Halterung schwenkbar gelagert ist und durch eine Verstelleinrichtung verstellbar ist. Die Verstelleinrichtung weist ein exzentrisch zur Schwenkachse am Reflektor angreifendes Verstellelement auf, das mit dem Reflektor über eine Doppelgelenkverbindung verbunden ist. Die Gelenkverbindung ist durch einen Zapfen gebildet, der an seinen beiden Enden jeweils einen Kugelkopf aufweist, wobei der Zapfen mit dem Kugelkopf an seinem einen Ende in einer mit dem Reflektor verbundenen Kugelaufnahme gelenkig aufgenommen ist und mit dem Kugelkopf an seinem anderen Ende in einer weiteren Kugelaufnahme gelenkig aufgenommen ist, die eine Gewindebohrung aufweist, in die das Verstellelement mit einem Gewindeabschnitt eingeschraubt ist. Diese doppelte Gelenkverbindung ist erforderlich, um vom Verstellelement Biegemomente und/oder Querkräfte fernzuhalten, die durch die vom Verstellelement bewirkte Schwenkbewegung des Reflektors auftreten könnten. Die bekannte Doppelgelenkverbindung erfordert mit dem Zapfen und den beiden Kugelaufnahmen viele Bauteile und außerdem wegen des an seinen beiden Enden mit jeweils einem Kugelkopf versehenen Zapfens vor allem in Verstellrichtung des Verstellelements einen großen Bauraum, so daß diese Doppelgelenkverbindung wenn nur ein beschränkter Einbauraum zur Verfügung steht nicht verwendet werden kann.

### Vorteile der Erfindung

Der erfindungsgemäße Scheinwerfer für Fahrzeuge mit den Merkmalen gemäß Anspruch 1 hat demgegenüber den Vorteil, daß die doppelte Gelenkverbindung mit dem Halteelement und dem Einsatzteil nur wenige Bauteile erfordert und außerdem in Verstellrichtung des Verstellelements nur einen geringen Bauraum erfordert.

In den abhängigen Ansprüchen sind vorteilhafte Ausgestaltungen und Weiterbildungen des erfindungsgemäßen Scheinwerfers angegeben. Durch die Ausbildung gemäß Anspruch 2 wird ein besonders geringer Einbauraum für die doppelte Gelenkverbindung in Verstellrichtung des Verstellelements benötigt. Die Ausbildung gemäß Anspruch 3 ermöglicht eine einfache Montage des Einsatzteils.

### Zeichnung

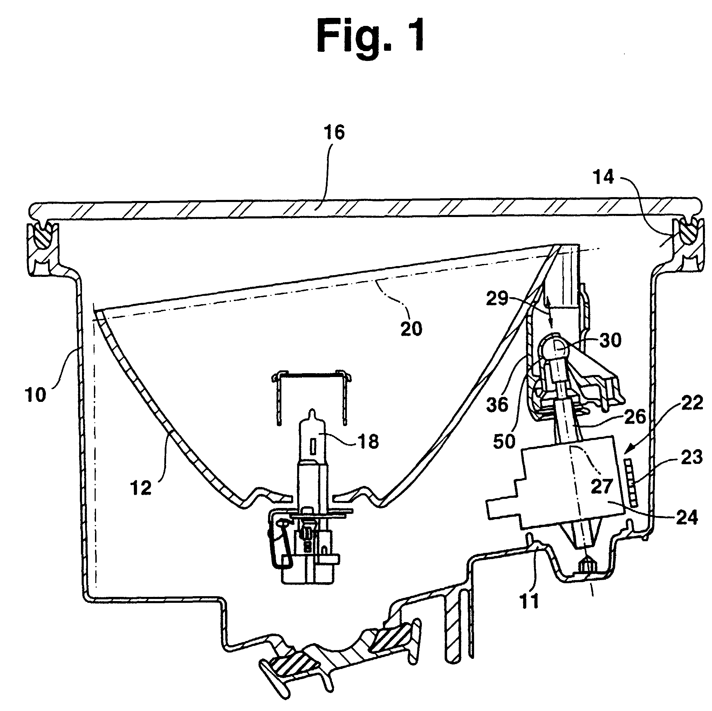

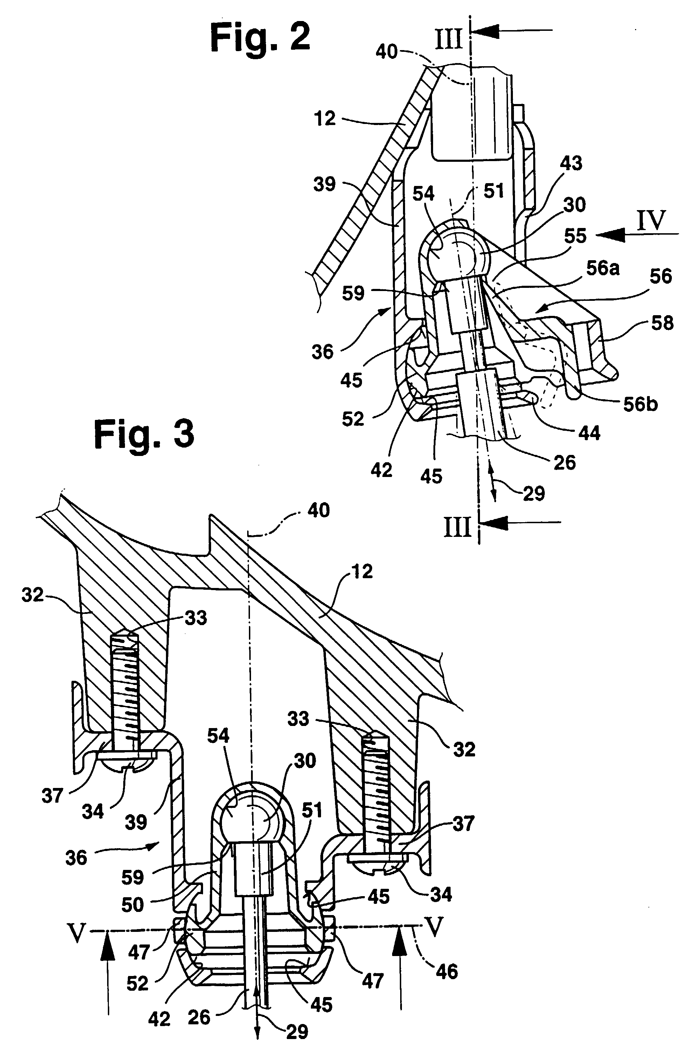

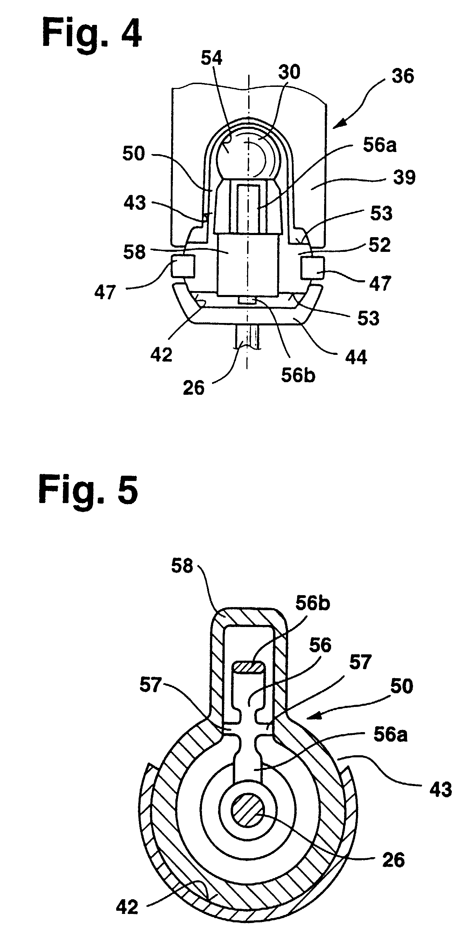

Ein Ausführungbeispiel der Erfindung ist in der Zeichnung dargestellt und in der nachfolgenden Beschreibung näher erläutert. Es zeigen Figur 1 einen Ausschnitt eines Scheinwerfers für Fahrzeuge in einem horizontalen Längsschnitt mit einer Gelenkverbindung einer Verstelleinrichtung, Figur 2 die Gelenkverbindung von Figur 1 in vergrößerter Darstellung, Figur 3 die Gelenkverbindung in einem Längsschnitt entlang Linie III-III in Figur 2, Figur 4 die Gelenkverbindung in einer Ansicht gemäß Pfeil IV in Figur 2 und Figur 5 eine modifizierte Ausführung der Gelenkverbindung in einem Querschnitt entlang der Linie V-V in Figur 3.

### Beschreibung des Ausführungsbeispiels

Ein in Figur 1 nur ausschnittsweise dargestellter Scheinwerfer für Fahrzeuge, insbesondere Kraftfahrzeuge, weist eine Halterung 10 in Form eines Gehäuses auf, an der wenigstens ein Reflektor 12 schwenkbar gelagert ist. Die Halterung 10 kann auch als ein Rahmen ausgebildet sein, an dem der Reflektor 12 gelagert ist. Das Gehäuse 10 weist ein vorderes Ende mit einer Lichtaustrittsöffnung 14 auf, die mit einer lichtdurchlässigen Abdeckscheibe 16 abgedeckt ist. Die Abdeckscheibe 16 ist am Gehäuse 10 befestigt und kann aus Glas oder Kunststoff bestehen.

Die Abdeckscheibe 16 kann glatt ausgebildet sein oder mit optischen Elementen versehen sein. In den Reflektor 12 ist in dessen Scheitelbereich eine Lichtquelle 18 eingesetzt, die eine Glühlampe oder eine Gasentladungslampe sein kann. Im Gehäuse 10 können auch mehrere Reflektoren 12 angeordnet sein, die einstückig miteinander ausgebildet sind oder starr miteinander verbunden sind. Der Reflektor 12 kann aus Metall oder Kunststoff bestehen, beispielsweise duroplatischem Kunststoff.

Der Reflektor 12 ist im Scheinwerfergehäuse 10 zumindest um eine horizontal verlaufende Achse 20 schwenkbar, so daß der Reflektor 12 in seiner Neigung verstellbar ist. Zusätzlich kann der Reflektor 12 auch um eine vertikale Achse schwenkbar sein, so daß eine Ausrichtung des Reflektors in horizontaler Richtung ermöglicht ist. Für eine Verstellung der Neigung des Reflektors 12 ist eine Verstelleinrichtung 22 vorgesehen, die im Scheinwerfergehäuse 10 angeordnet ist. Die Verstelleinrichtung 22 weist einen Elektromotor 24 sowie ein nicht dargestelltes Untersetzungsgetriebe durch das ein Verstellelement 26 in Form einer Stange angetrieben wird. Der Elektromotor 24 ist über eine Halterung 23 im Scheinwerfergehäuse 10 gehalten. Die Verstelleinrichtung 22 ist zwischen der Rückwand 11 des Scheinwerfergehäuses 10 und der Rückseite des Reflektors 12 versetzt zum Scheitelbereich des Reflektors 12 angeordnet. Anstelle des Antriebs mit dem Elektromotor und dem Getriebe kann die Verstelleinrichtung 22 auch hydraulisch oder pneumatisch wirksam sein. Die Stange 26 wird bei einer Betätigung des Elektromotors 24 in Richtung ihrer Längsachse 27 gemäß dem Doppelpfeil 29 durch das Untersetzungsgetriebe bewegt. Die Stange 26 weist an ihrem vom Elektromotor 24 wegweisenden Ende einen Kugelkopf 30 auf.

Von der Rückseite des Reflektors 12 stehen wie in Figur 3 dargestellt zwei Dome 32 ab, die jeweils eine axiale Sackbohrung 33 aufweisen. Mit dem Reflektor 12 ist mittels zweier in die Bohrungen 33 eingeschraubter Schrauben 34 ein Halteelement 36 verbunden. Das Halteelement 36 weist zwei Träger 37 auf, durch die die Schrauben 34 hindurchtreten und die an den vom Reflektor 12 wegweisenden Stirnseiten der Dome 32 aufliegen. Einstückig mit den Trägern 37 weist das Halteelement 36 einen etwa zylinderförmigen Bereich 39 mit einer Längsachse 40 auf, der sich von der Rückseite des Reflektors 12 wegerstreckt. Im vom Reflektor 12 wegweisenden Endbereich ist im Halteelement 36 eine Kugelaufnahme 42 ausgebildet. Die Kugelaufnahme 42 weist wie in Figur 2 dargestellt an ihrem Umfang eine Öffnung 43 auf, das heißt, daß die Kugelaufnahme 42 über ihren Umfang um die Längsachse 40 herum nicht geschlossen ist. Die Öffnung 43 setzt sich wie in den Figuren 2 und 4 dargestellt in Richtung der Längsachse 40 zum Reflektor 12 hin im zylinderförmigen Bereich 39 des Halteelements 36 fort, reicht jedoch nicht bis zum zum Reflektor 12 weisenden Ende des Bereichs 39. An ihrem vom Reflektor 12 wegweisenden Ende weist die Kugelaufnahme 42 eine senkrecht zur Längsachse 40 angeordnete Abschlußwand 44 auf, bis zu der die Öffnung 43 reicht.

Die Kugelaufnahme 42 weist eine zur Längsachse 40 koaxiale durchgehende Öffnung auf, so daß die Kugelaufnahme 42 durch die Abschlußwand 44 und zum zylinderförmigen Bereich 39 hin offen ist. Zur Abschlußwand 44 hin und zum zylinderförmigen Bereich 39 hin ist die Kugelaufnahme 42 durch jeweils eine Stufe 45 begrenzt, die etwa senkrecht zur Längsachse 40 angeordnet ist. Die Kugelaufnahme 42 weist an ihrem Umfang in einer Mittelebene 46 senkrecht zur Längsachse 40 des Halteelements 36 einander diametral gegenüberliegend zwei kugelförmig gekrümmte Rastarme 47 auf, die federnd ausschwenkbar sind. Die Rastarme 47 erstrecken sich über mehr als die Hälfte des Umfangs der Kugelaufnahme 42 in der Mittelebene 46, so daß sie eine Hinterschneidung bilden und der Abstand zwischen ihren Enden geringer ist als der Durchmesser der Kugelaufnahme 42. Die Rastarme 47 können dadurch gebildet sein, daß die Kugelaufnahme 42 mit jeweils zwei Schlitzen versehen ist, zwischen denen dann jeweils ein Rastarm 47 stehen bleibt. Das Halteelement 36 ist vorzugsweise als Spritzgießteil ausgebildet, das einstückig die Träger 37, den zylinderförmigen Bereich 39 und die Kugelaufnahme 42 aufweist und aus elastisch verformbarem Kunststoff, beispielsweise thermoplastischem Kunststoff besteht.

In das Halteelement 36 ist ein Einsatzteil 50 eingesetzt, das einen in seiner Außenkontur kugelförmigen Abschnitt 52 aufweist, der in der Kugelaufnahme 42 des Halteelements 36 gelenkig aufgenommen ist. Der kugelförmige Abschnitt 52 ist in Richtung der Längsachse 51 des Einsatzteils 50 durch etwa senkrecht zur Längsachse 51 angeordnete Wände 53 begrenzt. Das Einsatzteil 50 weist an seinem bezüglich des kugelförmigen Abschnitts 52 in Verstellrichtung 29 des Verstellelements 26 zum Reflektor 12 hin versetzten Endbereich eine vom Reflektor 12 weg offene Kugelaufnahme 54 auf. Das Einsatzteil 50 weist ausgehend vom von der Rückseite des Reflektors 12 wegweisenden Ende des kugelförmigen Abschnitts 52 bis zur Kugelaufnahme 54 eine durchgehende Öffnung auf, ist also hohl ausgebildet. Die Kugelaufnahme 54 und der kugelförmige Abschnitt 52 des Einsatzteils sind nicht über ihren gesamten Umfang um die Längsachse 51 des Einsatzteils 50 geschlossen ausgebildet, sondern weisen einen offenen Bereich 55 auf. Im offenen Bereich 55 ist ein zweiarmiger schwenkbarer Hebel 56 angeordnet, dessen einer Arm 56a innerhalb des Halteelements 36 zur Kugelaufnahme 54 weist und dessen anderer Arm 56b außerhalb des Halteelements 36 vom Reflektor 12 wegweisend angeordnet ist. In dem zwischen seinen beiden Armen 56a,56b angeordneten mittleren Bereich ist der Hebel 56 mit dem Einsatzteil 50 schwenkbar verbunden, wobei der Hebel 56 in seiner Ausgangsstellung wie in Figur 2 dargestellt angeordnet ist und federnd in eine in Figur 2 mit gestrichelten Linien dargestellte Stellung schwenkbar ist. Vorzugsweise ist der Hebel 56 einstückig mit dem Einsatzteil 50 ausgebildet und wie in Figur 5 dargestellt über zwei im Querschnitt verminderte Stege 57 am Einsatzteil 50 angeformt, wobei der Hebel 56 bei Krafteinwirkung unter elastischer Verformung der Stege 57 schwenkbar ist und ohne Krafteinwirkung selbsttätig wieder in seine Ausgangsstellung zurückkehrt. Das Einsatzteil 50 weist einen außerhalb des Halteelements 36 angeordneten, den Hebel 56 übergreifenden u-förmigen Bügel 58 auf, zwischen dessen Schenkeln der Hebel 56 angeordnet ist. Das Einsatzteil 50 ist vorzugsweise als Spritzgießteil ausgebildet, das einstückig den kugelförmigen Abschnitt 52, die Kugelaufnahme 54, den Hebel 56 und den Bügel 58 aufweist und besteht aus elastisch verformbarem Kunststoff, beispielsweise thermoplastischem Kunststoff.

Das Einsatzteil 50 ist quer zur Verstellrichtung 29 des Verstellelements 26 durch die Öffnung 43 in das Halteelement 36 einsetzbar, wobei es mit seinem kugelförmigen Abschnitt 52 in die Kugelaufnahme 42 des Halteelements 36 eintritt. Dabei tritt der kugelförmige Abschnitt 52 des Einsatzteils 50 zwischen den Rastarmen 47 hindurch, die federnd nach außen schwenken bis der Abschnitt 52 in der Kugelaufnahme 42 anliegt und die Rastarme 47 wieder nach innen schwenken, so daß der Abschnitt 52 rastartig in der Kugelaufnahme 42 gehalten ist. Das Einsatzteil 50 ist dann gelenkig im Halteelement 36 aufgenommen, wobei die Kugelaufnahme 54 des Einsatzteils um dessen Schwenkbarkeit zu ermöglichen mit Spiel im zylinderförmigen Bereich 39 des Halteelements 36 angeordnet ist. Die Schwenkbarkeit des Einsatzteils 50 im Halteelement 36 ist durch die Anlage der den kugelförmigen Abschnitt 52 begrenzenden Wände 53 an den Stufen 45 begrenzt. Durch die offene Abschlußwand 45 des Halteelements 36 und das Einsatzteil 50 kann die Stange 26 mit ihrem Kugelkopf 30 eingeführt werden, bis der Kugelkopf 30 in der Kugelaufnahme 54 anliegt. Dabei wird der Arm 56a des Hebels 56 durch den Kugelkopf 30 federnd nach außen geschwenkt bis der Kugelkopf 30 in der Kugelaufnahme 54 anliegt. In dieser Stellung schwenkt der Arm 56a des Hebels 56 wieder nach innen und sichert den Kugelkopf 30 in der Kugelaufnahme 54 gegen Herausziehen in Verstellrichtung 29 der Stange 26. Am Übergang zwischen der Stange 26 und dem Kugelkopf 30 ist eine vom Reflektor 12 wegweisende Stufe 59 gebildet, an der der Arm 56a des Hebels 56 angreift und dadurch ein Herausziehen des Kugelkopfs 30 aus der Kugelaufnahme 54 verhindert. Zu einer beabsichtigten Demontage der Stange 26 kann mit einem Werkzeug am Arm 56b des Hebels 56 zur Stange 26 hin wirkend eine Kraft aufgebracht werden, so daß der Arm 56b nach innen und entsprechend der Arm 56a nach außen geschwenkt wird und den Kugelkopf 30 freigibt, so daß dieser aus der Kugelaufnahme 54 herausgezogen werden kann. Bei der durch die Verstellbewegung der Stange 26 in Verstellrichtung 29 bewirkten Schwenkbewegung des Reflektors 12 tritt auch eine Bewegung des Reflektors 12 quer zur Verstellrichtung 29 auf, die durch eine Schwenkbewegung des Kugelkopfs 30 in der Kugelaufnahme 54 und des kugelförmigen Abschnitts 52 in der Kugelaufnahme 42 die Bewegung des Reflektors 12 ausgeglichen wird, so daß keine Biegemomente und/oder Querkräfte auf die Stange 26 wirken. Dadurch, daß der kugelförmige Abschnitt 52 des Einsatzteils 50 und die diesen aufnehmende Kugelaufnahme 42 zwischen dem Kugelkopf 30 der Stange 26 und der Verstelleinrichtung 22 angeordnet sind, erfordert die doppelte Gelenkverbindung in Verstellrichtung 29 keinen größeren Bauraum als eine einfache Gelenkverbindung, bei der nur die Stange 26 über ihren Kugelkopf 30 in der Kugelaufnahme 54 mit dem Reflektor 12 verbunden ist.

Bei einer in Figur 5 dargestellten modifizierten Ausführung des Halteelements 36 können die Rastarme 47 der Kugelaufnahme 42 des Halteelements 36 entfallen, wobei die Kugelaufnahme 42 so ausgebildet wird, daß die Öffnung 43 sich über weniger als die Hälfte des Umfangs der Kugelaufnahme 42 um die Längsachse 40 erstreckt. Hierdurch bildet die Kugelaufnahme 42 eine Hinterschneidung, so daß der kugelförmige Abschnitt 52 des Einsatzteils 50 rastartig in der Kugelaufnahme 42 gehalten ist. Die Kugelaufnahme 42 weist dabei eine solche Elastizität auf, daß die Öffnung 43 zum Durchtritt des kugelförmigen Abschnitts 52 des Einsatzteils 50 unter elastischer Verformung der Kugelaufnahme 42 aufgeweitet werden kann und nach Durchtritt des kugelförmigen Abschnitts 52, wenn dieser in der Kugelaufnahme 42 anliegt, sich wieder verkleinert, so daß der Kugelabschnitt 52 rastartig in der Kugelaufnahme 42 gehalten ist.

## Patentansprüche

1. Scheinwerfer für Fahrzeuge mit wenigstens einem Reflektor (12), der an einer Halterung (10) gelagert ist und der zu dessen Einstellung relativ zur Halterung (10) um wenigstens eine Achse (20) schwenkbar ist, mit einer Verstelleinrichtung (22), die ein am Reflektor (12) exzentrisch zur Schwenkachse (20) angreifendes Verstellelement (26) aufweist, das mit dem Reflektor (12) über eine doppelte Gelenkverbindung verbunden ist, wobei am Reflektor (12) ein Halteelement (36) angeordnet ist, das eine Kugelaufnahme (42) aufweist, und in der Kugelaufnahme (42) des Halteelements (36) ein Einsatzteil (50) mit einem kugelförmigen Abschnitt (52) schwenkbar aufgenommen ist, dadurch gekennzeichnet, daß das Einsatzteil (50) eine weitere Kugelaufnahme (54) aufweist, in der das Verstellelement (26) mit einem an diesem angeordneten Kugelkopf (30) schwenkbar aufgenommen ist und daß die Kugelaufnahme (54) des Einsatzteils (50) in Verstellrichtung (29) des Verstellelements (26) betrachtet näher am Reflektor (12) angeordnet ist als die Kugelaufnahme (42) des Halteelements (36).

2. Scheinwerfer nach Anspruch 1, dadurch gekennzeichnet, daß der kugelförmige Abschnitt (52) des Einsatzteils (50) hohl ausgebildet ist und daß das Verstellelement (26) durch den kugelförmigen Abschnitt (52) hindurchtritt.

3. Scheinwerfer nach Anspruch 1 oder 2, dadurch gekennzeichnet, daß die Kugelaufnahme (42) des Halteelements (36) an ihrem Umfang um die Längsachse (40) des Halteelements (36) eine Öffnung (43) aufweist, durch die das Einsatzteil (50) quer zur Verstellrichtung (29) des Verstellelements (26) mit seinem kugelförmigen Abschnitt (52) in die Kugelaufnahme (42) des Halteelements (36) einsetzbar ist.

4. Scheinwerfer nach Anspruch 2 oder 3, dadurch gekennzeichnet, daß das Halteelement (36) zum Reflektor (12) hin an die Kugelaufnahme (42) anschließend einen zylinderförmigen Bereich (39) aufweist, innerhalb dem die Kugelaufnahme (54) des Einsatzteils (50) angeordnet ist.

5. Scheinwerfer nach Anspruch 3 oder 4, dadurch gekennzeichnet, daß der kugelförmige Abschnitt (52) des Einsatzteils (50) in der Kugelaufnahme (42) des Halteelements (36) rastartig gehalten ist.

6. Scheinwerfer nach Anspruch 5, dadurch gekennzeichnet, daß das Halteelement (36) wenigstens einen am kugelförmigen Abschnitt (52) des Einsatzteils (50) angreifenden, quer zur Einsetzrichtung des Einsatzteils (50) federnd auslenkbaren Rastarm (47) aufweist, durch den der kugelförmige Abschnitt (52) des Einsatzteils (50) in der Kugelaufnahme (42) gehalten ist.

7. Scheinwerfer nach Anspruch 5, dadurch gekennzeichnet, daß sich die Öffnung (43) der Kugelaufnahme (42) des Halteelements (36) um die Längsachse (40) des Halteelements (36) über weniger als die Hälfte des Umfangs der Kugelaufnahme (42) erstreckt und daß der kugelförmige Abschnitt (52) des Einsatzteils (50) unter elastischer Aufweitung der Kugelaufnahme (42) in diese einsetzbar ist.

8. Scheinwerfer nach einem der vorstehenden Ansprüche, dadurch gekennzeichnet, daß am Einsatzteil (50) ein zweiarmiger Hebel (56) schwenkbar angeordnet ist, der mit seinem einen Arm (56a) am Kugelkopf (30) des Verstellelements (26) zu dessen Sicherung in der Kugelaufnahme (54) des Einsatzteils (50) angreift und dessen anderer Arm (56b) zu einer Schwenkung des Hebels (56) zur Freigabe des Kugelkopfs (30) des Verstellelements (26) betätigbar ist.

9. Scheinwerfer nach einem der vorstehenden Ansprüche, dadurch gekennzeichnet, daß das Halteelement (36) ein aus elastisch verformbarem Werkstoff, insbesondere Kunststoff bestehendes Spritzgießteil ist, das einstückig die Kugelaufnahme (42) aufweist.

10. Scheinwerfer nach einem der vorstehenden Ansprüche, dadurch gekennzeichnet, daß das Einsatzteil (50) ein aus elastisch verformbarem Werkstoff, insbesondere Kunststoff bestehendes Spritzgießteil ist, das einstückig die Kugelaufnahme (54), den kugelförmigen Abschnitt (52) sowie gegebenenfalls den zweiarmigen Hebel (56) aufweist.

## Claims

1. Vehicle headlamp, having at least one reflector (12) which is mounted on a support (10) and which can be pivoted, in order to adjust it, relative to the support (10) about at least one axis (20), having an adjusting device (22) which has an adjusting element (26) which acts eccentrically to the pivot axis (20) on the reflector (12) and is connected to the reflector (12) via a double hinge connection, there being arranged on the reflector (12) a retaining element (36) which has a ball socket (42), and in the ball socket (42) of the retaining element (36) an insert part (50) having a spherical section (52) is held in a pivotable manner, characterized in that the insert part (50) has a further ball socket (54) in which the adjusting element (26) is held in a pivotable manner by means of a ball head (30) which is arranged on said adjusting element, and in that the ball socket (54) of the insert part (50), viewed in the adjusting direction (29) of the adjusting element (26), is arranged closer to the reflector (12) than the ball socket (42) of the retaining element (36) .

2. Headlamp according to Claim 1, characterized in that the spherical section (52) of the insert part (50) is of hollow design, and in that the adjusting element (26) passes through the spherical section (52).

3. Headlamp according to Claim 1 or 2, haracterized in that on its circumference about the longitudinal axis (40) of the retaining element (36), the ball socket (42) of the retaining element (36) has an opening (43) through which the insert part (50) can be inserted, transversely to the adjusting direction (29) of the adjusting element (26), by its spherical section (52) into the ball socket (42) of the retaining element (36) .

4. Headlamp according to Claim 2 or 3, characterized in that towards the reflector (12) the retaining element (36) has, adjoining the ball socket (42), a cylindrical region (39) within which the ball socket (54) of the insert part (50) is arranged.

5. Headlamp according to Claim 3 or 4, characterized in that the spherical section (52) of the insert part (50) is retained in the manner of a latch in the ball socket (42) of the retaining element (36).

6. Headlamp according to Claim 5, characterized in that the retaining element (36) has at least one latching arm (47) which acts on the spherical section (52) of the insert part (50), can be deflected in a resilient manner transversely to the insertion direction of the insert part (50) and by means of which the spherical section (52) of the insert part (50) is retained in the ball socket (42).

7. Headlamp according to Claim 5, characterized in that the opening (43) in the ball socket (42) of the retaining element (36) extends about the longitudinal axis (40) of the retaining element (36) over less than half of the circumference of the ball socket (42), and in that the spherical section (52) of the insert part (50) can be inserted into the ball socket (42) with elastic expansion of the latter.

8. Headlamp according to one of the preceding claims, characterized in that on the insert part (50) there is arranged, in a pivotable manner, a two-armed lever (56) which acts with its one arm (56a) on the ball head (30) of the adjusting element (26) to secure it in the ball socket (54) of the insert part (50) and its other arm (56b) can be operated to pivot the lever (56) for the purpose of releasing the ball head (30) of the adjusting element (26).

9. Headlamp according to one of the preceding claims, characterized in that the retaining element (36) is an injection-moulded part which consists of elastically deformable material, in particular plastic, and which integrally contains the ball socket (42).

10. Headlamp according to one of the preceding claims, characterized in that the insert part (50) is an injection-moulded part which consists of elastically deformable material, in particular plastic, and which integrally contains the ball socket (54), the spherical section (52) and, optionally, the two-armed lever (56).

## Revendications

1. Phare pour véhicules comprenant au moins un réflecteur (12) monté sur un support (10) et pouvant pivoter, pour son réglage, par rapport à la fixation (10), autour d'au moins un axe (20), et un dispositif de réglage (22) qui présente un élément de réglage (26) venant en prise sur le réflecteur (12) de façon excentrée par rapport à l'axe de pivotement (20), élément de réglage (26) qui est relié au réflecteur (12) au moyen d'une double liaison articulée, un élément de maintien (36) étant disposé sur le réflecteur (12), élément de maintien qui présente un logement sphérique (42), et un élément d'insertion (50) à section en forme de sphère (52) étant logé de façon à pouvoir pivoter dans le logement sphérique (42) de l'élément de maintien (36),
caractérisé en ce que
- la pièce d'insertion (50) présente un autre logement sphérique (54) dans lequel est logé, de façon à pouvoir pivoter, l'élément de réglage (26), avec une tête sphérique (30) disposée sur cet élément, et
- le logement sphérique (54) de la pièce d'insertion (50), vu dans le sens du déplacement (29) de l'élément de réglage (26), est disposé plus près du réflecteur (12) que le logement sphérique (42) de l'élément de maintien 36.

2. Phare selon la revendication 1,
caractérisé en ce que
- la section en forme de sphère (52) de la pièce d'insertion (50) est constituée de façon creuse, et
- l'élément de réglage (26) passe à travers la section en forme de sphère (52).

3. Phare selon la revendication 1 ou 2,
caractérisé en ce que
le logement sphérique (42) de l'élément de maintien (36) présente sur son pourtour, autour de l'axe longitudinal (40) de l'élément de maintien (36), une ouverture (43) à travers laquelle on peut insérer la pièce d'insertion (50) perpendiculairement au sens du déplacement (29) de l'élément de réglage (26), par sa section en forme de sphère (52), dans le logement sphérique (42) de l'élément de maintien (36).

4. Phare selon la revendication 2 ou 3,
caractérisé en ce que
l'élément de maintien (36) présente ensuite, en direction du réflecteur (12), sur le logement sphérique (42), une zone de forme cylindrique (39) à l'intérieur de laquelle est disposé le logement sphérique (54) de la pièce d'insertion (50).

5. Phare selon la revendication 3 ou 4,
caractérisé en ce que
la section de forme sphérique (52) de la pièce d'insertion (50) est maintenue par encliquetage dans le logement sphérique (42) de l'élément de maintien (36).

6. Phare selon la revendication 5,
caractérisé en ce que
l'élément de maintien (36) présente au moins un bras d'encliquetage (47) qui peut se déployer élastiquement perpendiculairement à la direction d'insertion de la pièce d'insertion (50), et qui vient en prise sur une section (52) de forme sphérique de la pièce d'insertion (50), bras d'encliquetage (47) au moyen duquel la section de forme sphérique (52) de la pièce d'insertion (50) est maintenue dans le logement sphérique (42).

7. Phare selon la revendication 5,
caractérisé en ce que
- l'ouverture (43)du logement sphérique (42) de l'élément de maintien (36) s'étend autour de l'axe longitudinal (40) de l'élément de maintien (36) sur moins de la moitié du pourtour du logement sphérique (42), et
- la section de forme sphérique (52) de la pièce d'insertion (50) peut, en élargissant de façon élastique le logement sphérique (42), être insérée dans celui-ci.

8. Phare selon l'une des revendications précédentes,
caractérisé en ce qu'
on dispose sur la pièce d'insertion (50) un levier à deux bras (56) de façon qu'il puisse pivoter, levier (56) qui, par l'un de ses bras, le bras (56a), vient en prise sur la tête sphérique (30) de l'élément de réglage (26) pour le fixer dans le logement sphérique (54) de la pièce d'insertion (50) et par son autre bras, le bras (56b), peut faire pivoter le levier (56) pour libérer la tête sphérique (30) de l'élément de réglage (26).

9. Phare selon l'une des revendications précédentes,
caractérisé en ce que
l'élément de maintien (36) est une pièce coulée par injection et réalisée en une matière élastiquement déformable, en particulier une matière plastique, pièce coulée par injection qui présente, d'un seul tenant, le logement sphérique (42).

10. Phare selon l'une des revendications précédentes,
caractérisé en ce que
la pièce d'insertion (50) est une pièce coulée par injection et réalisée en une matière élastiquement déformable, en particulier une matière plastique, pièce coulée par injection qui présente, d'un seul tenant, le logement sphérique (54), la section en forme de sphère (52), ainsi que, le cas échéant, le levier à deux bras (56).
